# EUROPEAN PATENT APPLICATION

(11) **EP 2 982 845 A1**
(43) Date of publication of application: **10.02.2016**
(21) Application number: 15176395.0
(22) Date of filing: 13.07.2015
(51) Int. Cl.: F02B 37/16, F02B 37/04, F02B 39/04, F02B 37/00, F02B 37/013, F01N 3/05, F01N 3/20, A01D 41/12

(54) **ARRANGEMENT FOR PROVIDING AN AFTERTREATMENT DEVICE HOUSING WITH AIR**

(30) Priority: 08.08.2014 US 201414455250
(71) Applicant: Deere & Company, Moline, IL 61265 (US)
(72) Inventor: Sheidler, Alan D, Moline, IL, 61265 (US); Sandau, Jerry A, Orion, IL Illinois 61273 (US)
(74) Representative: Holst, Sönke

(57) **Abstract**

An arrangement for providing an aftertreatment device housing with air comprises a combustion air intake (100) disposed receive combustion air for combustion in an internal combustion engine (118); a first supercharger (104) disposed to receive combustion air from the combustion air intake (100); a first conduit (106) disposed to receive the combustion air compressed in the first supercharger (104); a second conduit (110) coupled to the first conduit (106) to receive a first portion of the combustion air compressed in the first supercharger (104) from the first conduit (106); and a third conduit (112) coupled to the first conduit (106) to receive a second portion of the combustion air compressed in the first supercharger (104), wherein the third conduit (112) is configured to convey the second portion into the aftertreatment device housing (113) which substantially surrounds an aftertreatment device (114).

## Description

### Field of the Invention

The invention relates to work vehicles. More particularly it relates to aftertreatment devices for internal combustion engines of work vehicles.

### Background

In recent years, pollution from internal combustion engines of work vehicles has been increasingly regulated. Various devices have been provided to process the exhaust gases of vehicle engines and remove, catalyze, or further combust pollutants that are either entrained in or comprise a portion of the exhaust gases.

Such devices are generally called "after treatment devices" or "ATDs" in the vehicle industry. Many ATDs operate at a high temperature to combust or catalyze exhaust gas pollutants. These high temperatures pose a problem for work vehicles, such as agricultural work vehicles, including agricultural harvesters. In particular, the working environment of agricultural work vehicles includes a great deal of combustible dust and other particulate matter. As the vehicles travel through the field harvesting crops, this dust swirls around the vehicle and often enters into the engine compartment. If this dust comes in contact with an ATD it can accumulate on the surface of the ATD, and can catch fire when the ATD operates or is periodically thermally cycled.

To avoid this, ATDs may be enclosed in ATD housings that are spaced apart from the ATD. A flow of gas is introduced into the ATD housing and around the outer surface of the ATD to keep the ATD housing cool. By this arrangement, dust and other such particulate matter accumulating on the outside surface of the ATD housing will not combust.

One problem with this arrangement is that the air must be supplied into the ATD housing (and around the outside surface of the ATD) at a sufficiently high rate that it can keep the ATD housing cool. If the flow rate is too low, radiant heat from the ATD will heat up the ATD housing, and hence the outer surface of the ATD housing upon which particulate matter collects.

What is needed is a more effective arrangement for providing a supply of air into the ATD housing and around the outside of the ATD. It is an object of this invention to provide such an arrangement.

### Summary of the Invention

In accordance with a first aspect of the invention, an arrangement for providing an aftertreatment device housing with air comprises a combustion air intake disposed receive combustion air for combustion in an internal combustion engine; a first supercharger disposed to receive combustion air from the combustion air intake; a first conduit disposed receive the combustion air compressed in the first supercharger; a second conduit coupled to the first conduit to receive a first portion of the combustion air compressed in the first supercharger from the first conduit; and a third conduit coupled to the first conduit to receive a second portion of the combustion air compressed in the first supercharger, wherein the third conduit is configured to convey the second portion into the aftertreatment device housing which substantially surrounds an aftertreatment device.

The first portion may be conveyed to an internal combustion engine for combustion therein.

The first portion may be conveyed to a second supercharger for additional pressurization, and may then be conveyed to the internal combustion engine for combustion with fuel therein.

The first supercharger may be driven by mechanical elements that drivingly couple a crankshaft of the internal combustion engine to the first supercharger.

The second supercharger may be a turbosupercharger.

The first supercharger may be a turbosupercharger.

The arrangement may further comprise a charge air cooler that is disposed in a flow path of the first portion in a location between the second supercharger and the internal combustion engine, and that is configured to cool the first portion exiting the second supercharger before the first portion is introduced into the internal combustion engine for combustion.

The arrangement may further comprise a variable aperture disposed in the third conduit upstream of the aftertreatment device housing that is adjustable to vary a flow rate of the second portion into the aftertreatment device housing.

The arrangement may further comprise a combustion air filter disposed in between the combustion air intake and the first supercharger to filter combustion air passing from the combustion air intake to the first supercharger.

### Brief Description of the Drawings

Figure 1 is a schematic circuit diagram of an arrangement for providing an aftertreatment device housing with a supply of air.
Figure 2 is a schematic circuit diagram of an alternate arrangement for providing an aftertreatment device housing with a supply of air.

### Detailed Description

As used herein, the term "supercharger" refers to an air compressor of the positive displacement type or non-positive displacement type that increases the pressure or density of combustion air supplied to an internal combustion engine.

As used herein, the term "turbosupercharger" refers to superchargers that are driven by exhaust gas produced by an internal combustion engine using an exhaust gas turbine.

As used herein, the term "aftertreatment device" refers to on-vehicle devices that process the exhaust gases of internal combustion engines and remove, catalyze, and/or further combust pollutants that are either entrained in or comprise a portion of the exhaust gases.

A combustion air intake 100 is disposed to receive air from the surrounding environment. Air received in the combustion air intake 100 is communicated through a conduit into a combustion air filter 102 where it is filtered sufficiently to be introduced into the combustion chamber of an internal combustion engine. Combustion air passing through the combustion air filter 102 is communicated through a conduit to a first supercharger 104 where it is pressurized. Pressurized combustion air passing out of the first supercharger 104 is communicated through a first conduit 106 to a second supercharger 108 where the pressurized combustion air is further pressurized. The first conduit 106 is split into a second conduit 110 and the third conduit 112, thereby splitting the flow of pressurized combustion air from the first supercharger 104 into two separate flow paths. The first flow path is defined by the second conduit 110 and the second flow path is defined by the third conduit 112.

The second conduit 110 conveys a first portion of the pressurized combustion air to the second supercharger 108. The third conduit 112 conveys a second portion of the pressurized combustion air into an aftertreatment device housing 113 that surrounds an aftertreatment device 114. A variable aperture 130 is disposed in the third conduit 112 upstream of the aftertreatment device housing 113 and is adjustable to vary the flow rate of the second portion into the aftertreatment device housing 113.

The first portion is received in the second supercharger 108 and is compressed in the second supercharger 108. Upon leaving the second supercharger 108, the first portion is conveyed through a conduit into a charge air cooler 116. After passing through the charge air cooler 116, the first portion of pressurized combustion air is conducted through a conduit and into an internal combustion engine 118, where it is combusted with fuel and drives the internal combustion engine 118.

The second portion is received into the aftertreatment device housing 113 and flows around an outer surface of the aftertreatment device 114, which heats the second portion. The second portion then leaves the aftertreatment device housing 113 through a vent 120 and is released back to the atmosphere. The second portion is therefore filtered sufficiently to be introduced into the combustion chamber of the internal combustion engine, but is not combusted. Instead, it is redirected into the aftertreatment device housing 113. Although the second portion is separated from a combustion air stream (after at least an initial compression), the second portion is not combusted in the internal combustion engine.

The now-combusted first portion (i.e. the exhaust gas) is conducted from the internal combustion engine 118 through a conduit and into exhaust gas turbine 119). The exhaust gas turbine 119 is coupled to and drives the second supercharger 108. The exhaust gas leaving the exhaust gas turbine 119 is then conducted through conduit 122 and into the aftertreatment device 114. The conduit 122 passes through the housing and into the aftertreatment device 114. After passing through the aftertreatment device 114, the exhaust gas is conducted into conduit 124, which conveys the exhaust gas through the aftertreatment device housing 113.

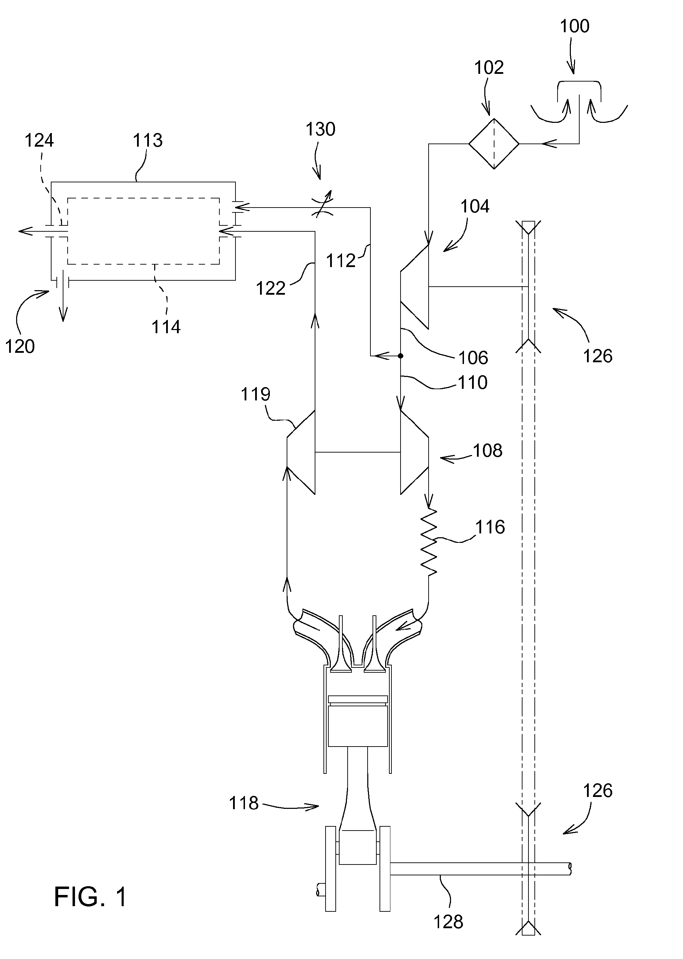

In the Figure 1 arrangement, the first supercharger 104 is coupled to and driven by the internal combustion engine 118. In the Figure 1 arrangement, the first supercharger 104 is driven by mechanical elements 126 that couple the crankshaft 128 of the internal combustion engine 118 to the first supercharger 104 to drive the first supercharger 104 in rotation. The mechanical elements 126 may comprise one or more gears, shafts, belts, pulleys, or the like. For convenience of illustration, the mechanical elements 126 shown in Figure 1 are shown symbolically as two pulleys and a belt coupling the pulleys.

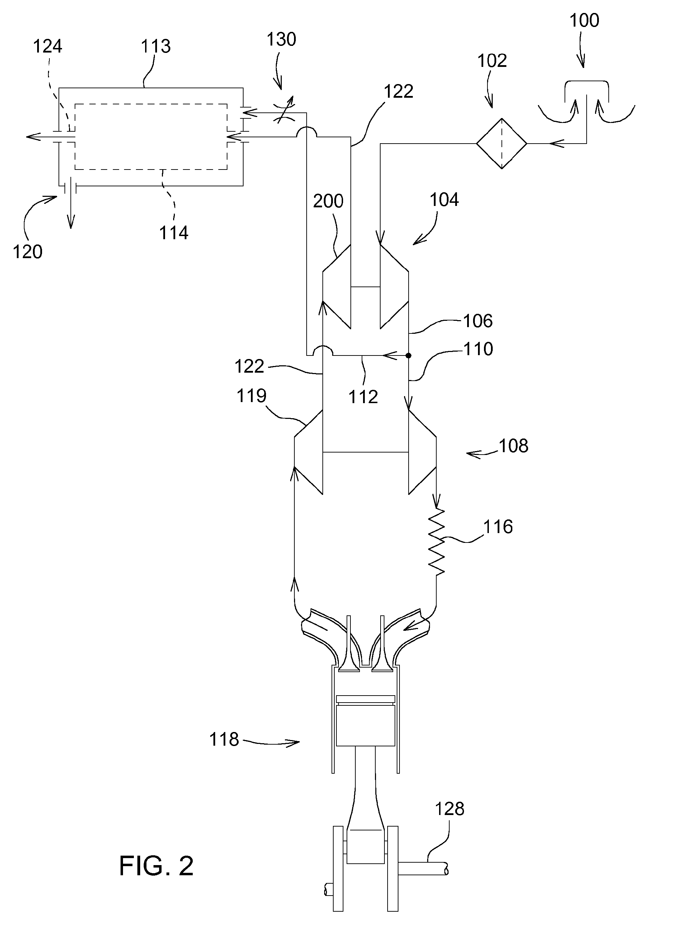

The arrangement of Figure 2 is the same as the arrangement of Figure 1, with one difference. In Figure 1, the first supercharger 104 is driven by mechanical elements 126. In Figure 2, the first supercharger 104 is a turbosupercharger driven by an exhaust gas turbine 200 and the mechanical elements 126 (Figure 1) that drive the first supercharger 104 are eliminated.

In Figure 2, the exhaust gas turbine 200 is disposed in conduit 122 between the exhaust gas turbine 119 and the aftertreatment device housing 113 to receive exhaust gas leaving the exhaust gas turbine 119 and be driven thereby. Exhaust gas leaving the exhaust gas turbine 200 is in conveyed through conduit 122 and into the aftertreatment device 114 as in the arrangement of Figure 1.

In Figure 2, the exhaust gas turbine 200 drives the first supercharger 104, and therefore the first supercharger 104 is a turbosupercharger.

The invention is not limited to the specific arrangements illustrated and/or described in this document. The specific arrangements merely illustrate one manner of making the invention. The invention itself, however, is defined by the claims.

In further arrangements other than the specific arrangements illustrated and/or described in this document, the second supercharger 108 may be coupled to and driven by mechanical elements (such as mechanical elements 126) that are coupled to the crankshaft 128. Using this arrangement the exhaust gas turbine 119 can be eliminated. Further, the charge air cooler 116 (or an additional charge air cooler) may be disposed between the first supercharger 104 and the second supercharger 108 to cool the compressed combustion air. Even further, other connections may be provided to the various conduits identified herein to direct further portions of the combustion air (compressed or uncompressed) and/or the exhaust gas to other devices.

## Claims

1. An arrangement for providing an aftertreatment device housing (113) with air comprising:
a combustion air intake (100) disposed to receive combustion air for combustion in an internal combustion engine (118);
a first supercharger (104) disposed to receive the combustion air from the combustion air intake (100);
a first conduit (106) disposed to receive the combustion air compressed in the first supercharger (104);
a second conduit (110) coupled to the first conduit (106) to receive a first portion of the combustion air compressed in the first supercharger (104) from the first conduit (106); and
a third conduit (112) coupled to the first conduit (106) to receive a second portion of the combustion air compressed in the first supercharger (104),
wherein the third conduit (112) is configured to convey the second portion into the aftertreatment device housing (113) which substantially surrounds an aftertreatment device (114).

2. The arrangement of Claim 1, wherein the first portion is conveyed to an internal combustion engine (118) for combustion therein.

3. The arrangement of Claim 2, wherein the first portion is conveyed to a second supercharger (108) for additional pressurization, and is then conveyed to the internal combustion engine (118) for combustion with fuel therein.

4. The arrangement of Claim 3, wherein the first supercharger (104) is driven by mechanical elements (126) that drivingly couple a crankshaft (128) of the internal combustion engine (118) to the first supercharger (104).

5. The arrangement of Claim 3, wherein the second supercharger (108) is a turbosupercharger.

6. The arrangement of Claim 5, wherein the first supercharger (104) is a turbosupercharger.

7. The arrangement of Claim 3, further comprising a charge air cooler (116) that is disposed in a flow path of the first portion in a location between the second supercharger (108) and the internal combustion engine (118), and that is configured to cool the first portion exiting the second supercharger (108) before the first portion is introduced into the internal combustion engine (118) for combustion.

8. The arrangement of Claim 1, further comprising a variable aperture (130) disposed in the third conduit (112) upstream of the aftertreatment device housing (113) that is adjustable to vary a flow rate of the second portion into the aftertreatment device housing (113).

9. The arrangement of Claim 1, comprising a combustion air filter (102) disposed in between the combustion air intake (100) and the first supercharger (104) to filter combustion air passing from the combustion air intake (100) to the first supercharger (104).

10. A vehicle with an arrangement according to one of the preceding claims.
